# EUROPÄISCHE PATENTSCHRIFT

(11) **EP 2 454 331 B1**
(45) Veröffentlichungstag und Bekanntmachung des Hinweises auf die Patenterteilung: **01.10.2014**
(21) Anmeldenummer: 10731499.9
(22) Anmeldetag: 01.07.2010
(51) Int. Cl.: C08G 18/67, C08G 18/75, C08F 222/10, C09D 175/16, C08F 220/18

(54) **BINDEMITTEL ZUR HERSTELLUNG SCHNELL ÜBERROLLBARER FAHRBAHNMARKIERUNGEN**
BINDING AGENT FOR PRODUCING ROAD MARKINGS READY QUICKLY FOR TRAFFIC
LIANT POUR LA CONFECTION DE MARQUAGE ROUTIER POUVANT ÊTRE RENDU RAPIDEMENT À LA CIRCULATION

(30) Priorität: 16.07.2009 DE 102009027767
(43) Veröffentlichungstag der Anmeldung: 23.05.2012
(73) Patentinhaber: Evonik Röhm GmbH, 64293 Darmstadt (DE)
(72) Erfinder: NEUGEBAUER, Peter, 65552 Limburg (DE); HEEB, Heike, 64404 Bickenbach (DE); KIZEWSKI, Ingrid, 63457 Hanau (DE)
(86) Internationale Anmeldenummer: PCT/EP2010/059381
(87) Internationale Veröffentlichungsnummer: WO 2011/006767

(56) Entgegenhaltungen:
- WO-A1-02/085638
- WO-A1-2008/022861
- US-A1- 2003 099 819

## Beschreibung

### Gebiet der Erfindung

Die vorliegende Erfindung umfasst eine neuartige Formulierung zur Markierung von Fahrbahnen, wie beispielsweise Straßen, die nach der Applikation nach einer gegenüber dem Stand der Technik verkürzten Wartezeit wieder befahren werden kann.

An moderne Fahrbahnmarkierungen wird eine Reihe von Ansprüchen gestellt. Zum einen wird von solchen Systemen erwartet, dass sie eine einfache Auftragbarkeit auf der Straßenoberfläche und gleichzeitig hohe Lagerstabilität, sowie eine lange Lebensdauer der Markierung mit sich bringen. Auch von Bedeutung sind eine schnelle Verarbeitbarkeit und insbesondere eine schnelle Wiederbefahrbarkeit der markierten Fahrbahnoberfläche. Es ist von großer infrastruktureller Bedeutung, dass nach Markierungsarbeiten entsprechende Straßenabschnitte schnellstmöglich für den Verkehr wieder freigegeben werden können. Zur Verlegung von Fahrbahnmarkierungen ist es notwendig, den zu markierenden Verkehrsabschnitt bis zur vollständigen Trocknung bzw. Aushärtung des Markierungsmaterials bzw. seines Klebers abzusperren, damit die Markierung nicht durch frühzeitiges Überrollen beschädigt oder gar untauglich gemacht wird. Ein abgesperrter Verkehrsabschnitt bringt neben unerwünschten Verzögerungen und damit verbundenen Kosten auch ein erhöhtes Unfallrisiko mit sich.

Die Zeitspanne zwischen Auftrag von Markierungszusammensetzungen gemäß dem Stand der Technik auf die Fahrbahnoberfläche und der Wiederbefahrbarkeit, bzw. Überrollbarkeit hängt sehr stark von der Umgebungstemperatur und der Beschaffenheit der Fahrbahnoberfläche ab. Diese Zeitspanne liegt bei mindestens 5 min. Sie kann aber auch über 15 min betragen. Eine solche Wartezeit führt zu einer Verlangsamung des Straßenverkehrs, woraus sich dadurch verursachte, beträchtliche Behinderungen für Autofahrer und Unfallgefahren ergeben, welche die Hersteller und Verwender von Fahrbahnmarkierungen soweit wie möglich zu begrenzen suchen.

### Stand der Technik

Die Verkürzung der Wartezeit zwischen Auftragung und Befahrbarkeit einer Fahrbahnmarkierung ist schon längere Zeit Ziel der Entwicklung. Als Fahrbahnmarkierungsmaterialien werden zurzeit Systeme wie Lösungsmittel basierte Farben, Wasserfarben, thermoplastische Farben, Farben auf Basis von Reaktionsharzen sowie vorgefertigte Klebebänder eingesetzt. Letztere haben den Nachteil, dass sie aufwendig herzustellen und zu applizieren sind. Auch gibt es in Hinblick auf eine anzustrebende Langlebigkeit der Markierung nur eingeschränkte Freiheitsgrade bezüglich der Ausgestaltung der Markierung, z.B. mit Glasperlen.

Eine bekannte Lösung ist es, auf die Fahrbahnmarkierung eine größere Menge Glaskugeln aufzubringen, um einen isolierenden Film zu bilden und eine praktisch sofortige Überrollbarkeit der Fahrbahnmarkierung zu erlauben. Diese Technik ist jedoch nicht zufriedenstellend, weil sie einerseits eine geringe Dosierung der Fahrbahnmarkierung im Verhältnis zur Dosierung der Glaskugeln erfordert, woraus potentielle Abnutzungsprobleme entstehen, und andererseits beträchtliche Verluste von Glaskugeln auf der Fahrbahn auftreten. Glaskugeln werden primär zur Verbesserung der Reflektion in die Fahrbahnmarkierung eingearbeitet.

Eine bekannte Lösung ist die Aufbringung aus Lösungen in volatilen, organischen Lösungsmitteln, die aufgrund der geringeren Dichte relativ schnell trocknen. Ein solches System kann jedoch naturgemäß nur zu besonders dünnen Schichten führen, die zum einen eine Einschränkung der Formulierungsfreiheitsgrade, wie den Einbau von Glaskugeln, und zum anderen eine stark eingeschränkte Lebensdauer mit sich bringen. Wenn man besonders volatile Lösungsmittel wie z.B. Aceton, flüchtige Ketonderivate, Toluol oder Acetate verwendet, steigen jedoch auch die Gesundheitsrisiken für den Verwender. Außerdem ist ein Verlust an organischen Lösungsmitteln durch Verdampfung bzgl. einer nur oberflächlichen Trocknung sowohl für die Umwelt als auch für die Qualität der Markierung nachteilig. Durch eine Hautbildung kommt es nur zu einer schlechten Durchtrocknung im Inneren der Beschichtung, so dass Risiken bezüglich Haftungsverlust, Kohesionsverminderung, Verformung oder einer schlechten Einbindung von Glaskugeln auftreten. Es gibt somit nur die Möglichkeit, weniger Glaskugeln zu verwenden, oder ein ungünstigeres Verhältnis mit einem höheren Glaskugelanteil in Kauf zu nehmen. Daraus ergeben sich jedoch wieder potentielle Abnutzungsprobleme.
In Bezug auf die Trocknungsgeschwindigkeit sind insbesondere wässrige Systeme, wie beispielsweise ein EP 1 505 127 beschrieben, von großem Nachteil. Mit Ausnahme der toxikologischen Aspekte, weisen diese Systeme alle beschriebenen Nachteile der Lösungsmittel basierten Systeme auf. Zusätzlich ist die Trocknungszeit eines solchen Systems deutlich länger.

Thermoplastische Überzüge, die im geschmolzenen Zustand auf der Fahrbahnoberfläche aufgebracht werden, können an sich auch auf eine hohe Aushärtungsgeschwindigkeit und somit eine schnelle Überrollbarkeit optimiert werden. Ihre Verwendung hat den großen Nachteil eines zusätzlichen Verfahrensschrittes, indem das Produkt erst, z.B. bei 200 °C zum Schmelzen gebracht werden muss, bevor es appliziert werden kann. Dies ist nicht nur wegen der hohen Temperatur potentiell gefährlich, sondern thermoplastische Systeme weisen an sich eine erhöhte Abriebsneigung und eine verminderte thermische Belastbarkeit auf. Thermoplastische Systeme sind oft deutlich kurzlebiger als Systeme, die z.B. auf Reaktionsharzen basieren und unter Vernetzung reagieren.

Ein Ansatz zur Beschleunigung der Aushärtung von Reaktionsharzsystemen ist die Verwendung von ungesättigten Polyestern in den Harzsystemen, wie beispielsweise in EP 0 871 678 beschrieben. In EP 0 871 676 ist die Übertragung der gleichen ungesättigten bicyclischen Gruppen mit einem zusätzlich leicht zu abstrahierenden Proton von den Polyestern auf andere Polymere wie Polyolefine oder auch Polymethacrylate beschrieben. Die Ergebnisse zeigen jedoch in allen Fällen, dass es zu einer sehr schnellen Hautbildung nach der Applikation kommt, die eigentliche Aushärtung auch nur wenige Zentimeter dicker Schichten dagegen Stunden benötigt und somit eine schnelle Überrollbarkeit einer diese Polymere enthaltenden Fahrbahnmarkieung ausgeschlossen ist.

In WO 98/40424 werden 2- und 3-Komponenten-Formulierungen auf Basis ungesättigter Polyester in ungesättigten ethylenischen Verbindungen oder auf Basis von Methacrylpolymere in Metharylmonomeren vorgeschlagen, die mit einer Mischung aus einem chlorierten Dibenzoylperoxid und Dibenzoylperoxid in Gegenwart tertiärer aromatischer Amine ausgehärtet werden. Die besonders schnelle Aushärtung der an sich bekannten Formulierungen wird auf die Kombination der beiden Initiatoren zurückgeführt. Nachteilig ist dabei, dass zwingend halogenhaltige, genauer chlorhaltige Verbindungen eingesetzt werden müssen, die immer die Gefahr in sich bergen, bei einem späteren Abbau toxikologisch bedenkliche halogenorganische, genauer chloraromatische Abbauprodukte freizusetzen.

Weitere Nachteile sind der kleine Temperaturbereich, in dem diese Formulierungen Ihre Geschwindigkeit zeigen sowie eine schlechte UV-Beständigkeit der ungesättigten ethylenischen Verbindungen.
Keine der oben genannten Lösungen zur Verkürzung der Wartezeit vor der Wiederaufnahme des Straßenverkehrs auf einer frisch markierten Straße ist daher zufriedenstellend: weder in Bezug auf die Sicherheit und die Gesundheit der Hersteller und Verwender der Fahrbahnmarkierungszusammensetzung, noch für die Umwelt, die Haltbarkeit der Fahrbahnmarkierung und die Sichtbarkeit der Fahrbahnmarkierung am Tag und in der Nacht.

### Aufgabe

Aufgabe der vorliegenden Erfindung ist die Bereitstellung einer neuen Formulierung zur Markierung von Fahrbahnoberflächen, die ein Reaktionsharz enthält, das gegenüber dem Stand der Technik schneller oder mindestens genauso schnell aushärtet und eine schnelle Überrollbarkeit der Markierung nach Auftragen auf der Fahrbahnoberfläche von unter 5 min ermöglicht. Dies soll in einem Bereich zwischen 5 °C und 50 °C unabhängig von der Umgebungstemperatur möglich sein.

Eine besondere Aufgabe besteht darin, ein Reaktionsharz zur Verfügung zu stellen, das gegenüber dem Stand der Technik langlebigere, bzw. mindestens genauso langlebige Fahrbahnmarkierungen mit guten Retroreflektionseigenschaften, guter Tages- und Nachtsichtbarkeit, einem hohen, stabilen Weissgrad und einer guten Griffigkeit, auch bei nasser Fahrbahn, ermöglicht.

Eine weitere Aufgabe besteht darin, dass die Zeitspanne zwischen Applikation auf der Fahrbahnoberfläche und der Überrollbarkeit, unabhängig von der Auftragsdicke, die zwischen 400 µm und 2000 µm liegen soll, unter 5 min, bevorzugt unter 2 min messen soll. Dabei soll die neuverlegte Fahrbahnmarkierung von Anfang an eine Griffigkeit aufweisen, die dem Stand der Technik entspricht.

Eine weitere Aufgabe besteht darin, ein Reaktionsharz für schnell überrollbare Fahrbahnmarkierungen zur Verfügung zu stellen, das gegenüber dem Stand der Technik bezüglich toxikologischen und ökologischen Aspekten weniger kritisch ist.

Es besteht darüber hinaus die Aufgabe, ein 2-K-System zur Anwendung als Fahrbahnmarkierung zur Verfügung zu stellen, das breit einsetzbar, flexibel formulierbar und relativ lange lagerstabil sein soll.

Weitere nicht explizit genannte Aufgaben ergeben sich aus dem Gesamtzusammenhang der nachfolgenden Beschreibung, Ansprüche und Beispiele.

### Lösung

Die Aufgaben werden gelöst durch die Bereitstellung eines neuen Fahrbahnmarkierungssystems, genauer durch die Bereitstellung einer neuen flexiblen Kaltspritzplastik auf (Meth)acrylatbasis.

Insbesondere werden die Aufgaben einer gegenüber dem Stand der Technik schnelleren oder zumindest vergleichbaren Aushärtgeschwindigkeit bzw. Überrollbarkeit bei gleichzeitig sehr guten optischen Eigenschaften, wie Weissgrad, Tages- bzw. Nachtsichtbarkeit und Reflektionseigenschaften, und einer langen Lebensdauer durch die Bereitstellung eines neuartigen Reaktionsharzes, das als Hauptbestandteil der Kaltspritzplastik eingesetzt wird, und folgende Zusammensetzung aufweist, gelöst:
- 20 Gew% bis 30 Gew% Vernetzer, bevorzugt ausgewählt aus der Gruppe
   der Dimethacrylate,
- 30 Gew% bis 40 Gew% Monomere, bevorzugt (Meth)acrylate und/oder mit
   (Meth)acrylaten copolymerisierbare Komponenten,
- 10 Gew% bis 20 Gew% Urethan(meth)acrylate,
- 15 Gew% bis 25 Gew% Präpolymere und
- 0 Gew% bis 5 Gew% Beschleuniger.

Darüber hinaus können weitere Hilfsstoffe wie Stabilisatoren, Inhibitoren, Regler oder Wachse enthalten sein.

Auf Basis dieser Reaktionsharze werden Formulierungen, die eine von optional zwei bis drei Komponenten der gesamten Kaltspritzplastik ausmachen, hergestellt. Diese Formulierungen enthalten erfindungsgemäß folgende Komponenten:
- 15 Gew% bis 45 Gew% des erfindungsgemäßen Reaktionsharzes,
- 1 Gew% bis 5 Gew% einer Mischung, enthaltend ein oder mehrere Initiatoren,
- 7 Gew% bis 15 Gew% eines anorganischen Pigments, bevorzugt Titandioxid und
- 50 Gew% bis 60 Gew% weiterer mineralischer Füllstoffe.

Überraschend wurde gefunden, dass eine Fahrbahnmarkierung, erhältlich durch Applikation einer Kaltplastik, enthaltend ein erfindungsgemäßes Reaktionsharz schnell aushärtet und bereits nach 5 min. und bevorzugt nach 2 min. eine derartige Festigkeit, Untergrundhaftung, Formstabilität und Abriebsfestigkeit aufweist, dass sie wieder befahren werden kann. Das heißt bei Anwendung im Straßenverkehr, dass bei Verwendung des erfindungsgemäßen Systems ein aufwendiges und langwieriges Absperren des zu markierenden Fahrbahnabschnittes nicht mehr nötig ist.

Überraschend wurde auch gefunden, dass diese kurze Anfangshärtungszeit bis zur Überrollbarkeit der Fahrbahnmarkierung in dem für die Anwendung relevanten Temperaturfenster zwischen 5 °C und 50 °C, bevorzugt zwischen 1 °C und 60 °C temperaturunabhängig ist.

Unter dem Begriff Überrollbarkeit bzw. dem synonym verwendeten Begriff Wiederbefahrbarkeit wird eine Belastung der Fahrbahnmarkierung, z.B. in Form des Überrollens durch Fahrzeuge, verstanden. Die Zeitspanne bis zur Erreichung einer Überrollbarkeit ist die Zeitspanne zwischen dem Auftragen der Fahrbahnmarkierung bis zu dem Zeitpunkt, an dem keine Veränderungen in Form eines Abriebs, eines Haftungsverlusts zur Fahrbahnoberfläche bzw. zu den eingebetteten Glaskugeln oder einer Verformung der Markierung mehr festgestellt werden kann. Die Messung der Form- und Haftungsstabilität erfolgt gemäß DIN EN 1542 99 in Einklang mit DAfStb-RiLi 01.

Darüber hinaus wurde auch überraschend gefunden, dass diese kurze Anfangshärtungszeit bis zur Überrollbarkeit der Fahrbahnmarkierung in einem Bereich zwischen 400 µm und 2000 µm, unabhängig von der Auftragsdicke, ist. Die Auftragsdicke der erfindungsgemäßen Kaltplastik liegt zwischen 400 µm und 2000 µm, bevorzugt zwischen 500 µm und 1000 µm und besonders bevorzugt zwischen 600 µm und 800 µm. Zusätzlich kann diese Komponente weitere Hilfsstoffe wie Netz- und/oder Dispergiermittel, einen griffigen (rutschfesten) Füllstoff und Antiabsetzmittel enthalten. Auch können die Glaskugeln, die zur Verbesserung der Reflexion zugesetzt werden, bereits in dieser Komponente der Kaltplastik enthalten sein. Alternativ können diese auch Bestandteil der zweiten Komponente sein und bevorzugt, je nach Auftragungsmechanismus der Fahrbahnmarkierung, werden die Glaskugeln als dritte Komponente aufgetragen. Bei diesem Vorgehen, zum Beispiel angewendet mit modernen Markierungsfahrzeugen mit einer zweiten Düse, werden die Kugeln direkt nach dem Auftrag der ersten beiden Komponenten auf diese aufgespritzt. Vorteil bei diesem Vorgehen ist, dass nur der Teil der Glaskugeln, der in die Markierungsmatrix eingebettet ist, mit den Bestandteilen der anderen beiden Komponenten benetzt ist und man erhält optimale Reflexionseigenschaften. Ganz besonders bei Anwendung dieser Technologie ist jedoch eine besonders gute Einbettung der Glasperlen und eine entsprechend gute Haftung der Markierungsmatrix, bzw. der Fahrbahnmarkierungsformulierung an der Oberfläche der Glaskugeln wichtig. Überraschend wurde gefunden, dass das erfindungsgemäße Reaktionsharz, bzw. die Kaltspritzplastik, dieses Reaktionsharz enthaltend, diese geforderten Eigenschaften mindestens auf dem Niveau des Standes der Technik erfüllt. Genaue geregelt sind die geforderten Eigenschaften an eine Straßenmarkierung in DIN EN 1436.

Um die geforderten Eigenschaften weiter zu verbessern, können die Glaskugeln mit Haftvermittlern zusammen aufgetragen oder mit diesen vorher behandelt werden. Somit sind die Retroreflektionseigenschaften und die Tages- bzw. Nachtsichtbarkeit der erfindungsgemäßen Kaltplastik mit dem Stand der Technik zumindest vergleichbar. Entsprechendes gilt für die Langlebigkeit, insbesondere der Einbettung der Glasperlen.

Die zweite Komponente der Kaltplastik enthält den Initiator. Als Polymerisationsinitiatoren dienen insbesondere Peroxide oder Azoverbindungen. Unter Umständen kann es vorteilhaft sein, ein Gemisch verschiedener Initiatoren einzusetzen. Vorzugsweise finden halogenfreie Peroxide wie Dilauroylperoxid, Dibenzoylperoxid, tert.-Butylperoctoat, Di(tert-butyl)peroxid (DTBP), Di(tert-amyl)peroxid (DTAP), tert-Butylperoxy-(2-ethylhexyl)carbonat (TBPEHC) und weitere bei hoher Temperatur zerfallende Peroxide als Radikalinitiator Verwendung. Für Reaktionsharze zur Anwendung zum Beispiel für Fahrbahnmarkierungen sind besonders bevorzugt Dilauroylperoxid oder Dibenzoylperoxid. In der Regel ist das Peroxid in der zweiten Komponente mit einem Verdünnungsmittel, beispielsweise mit einem Phthalat wie Dibutylphthalat, einem Öl oder einem anderen Weichmacher versetzt. Die erfindungsgemäße Kaltplastik als Summe der ersten und der zweiten, sowie optional der dritten Komponente enthält zwischen 0,1 Gew% und 7 Gew%, bevorzugt zwischen 0,5 Gew% und 6 Gew% und ganz besonders bevorzugt zwischen 1 Gew% und 5 Gew% des Initiators bzw. der Mischung aus dem Initiator und dem Verdünnungsmittel.

Durch die Halogenfreiheit des Initiatorsystems lässt sich eine Halogenfreiheit der gesamten Kaltplastik und damit der Fahrbahnmarkierung an sich leicht realisieren. Damit sind die erfindungsgemäßen Markierungen gegenüber schnell überrollbaren Systemen, wie sie im Stand der Technik beschrieben sind, bezüglich toxikologischen und ökologischen Aspekten bevorzugt. Unter Halogenfreiheit versteht man, dass die Kaltplastik und die daraus hergestellte Fahrbahnmarkierung weniger als 0,1 Gew%, bevorzugt weniger als 0,01 Gew% Halogene enthalten.

Eine besondere Ausführungsform eines Redox-Starter-Systems für Reaktionsharze ist die Kombination aus Peroxiden und Beschleunigern, insbesondere Aminen. Als besagte Amine seien zum Beispiel tertiäre aromatisch substituierte Amine, wie insbesondere N,N-Dimethyl-p-toluidin, N,N-bis-(2-Hydroxyethyl)-p-toluidin oder N,N-bis-(2-Hydroxypropyl)-p-toluidin genannt. Das erfindungsgemäße Reaktionsharz kann bis zu 7 Gew%, bevorzugt bis zu 5 Gew% und ganz besonders bevorzugt bis zu 3 Gew% eines Beschleunigers enthalten.

In einer Alternativen Ausführungsform eines 3-K-Systems, ist der Beschleuniger in der zweiten Komponente, zum Beispiel in einem Verdünnungsmittel enthalten und der Initiator, z.B. das Peroxid ist Bestandteil des erfindungsgemäßen Reaktionsharzes. Bei der dritten Komponente handelt es sich wieder um die Glaskugeln und eventuell benötigte Haftvermittler.

Ein entscheidender Bestandteil des erfindungsgemäßen Reaktionsharzes sind die Vernetzer. Insbesondere mehrfunktionelle Methacrylate wie Allyl(meth)acrylat. Besonders bevorzugt sind di- oder tri-(Meth)acrylate wie beispielsweise 1,4-Butandioldi(meth)acrylat, Tetraethylenglycoldi(meth)acrylat, Triethylenglycoldi(meth)acrylat oder Trimethylolpropantri(meth)acrylat. Der Vernetzeranteil ist gegenüber dem Stand der Technik deutlich erhöht und liegt zwischen 13 Gew% und 35 Gew%, bevorzugt zwischen minimal 20 Gew% und maximal 30 Gew%. Überraschend wurde gefunden, dass dieser relativ hohe Anteil an Vernetzer nicht nur eine hohe Anfangshärtung mit sich bringt, sondern auch in Kombination mit den anderen Komponenten eine schnelle Überrollbarkeit der Fahrbahnmarkierung, das erfindungsgemäße Harz enthaltend, ermöglicht.

Ein zweiter entscheidender Bestandteil der erfindungsgemäßen Reaktionsharze sind die Urethan(meth)acrylate. Unter diesen versteht man im Rahmen dieser Erfindung Verbindungen, die (Meth)acrylat-Funktionalitäten aufweisen, die über Urethangruppen miteinander verknüpft sind. Sie sind durch die Umsetzung von Hydroxyalkyl(meth)acrylaten mit Polyisocyanaten und Polyoxyalkylenen, die mindestens zwei Hydoxyfunktionalitäten aufweisen, erhältlich. Anstelle von Hydroxyalkyl(meth)acrylaten können auch Ester der (Meth)acrylsäure mit Oxiranen, wie beispielsweise Ethylen- oder Propylenoxid, oder entsprechenden Oligo- bzw. Polyoxiranen verwendet werden. Einen Überblick beispielsweise über Urethan(meth)acrylate mit einer Funktionalität größer zwei findet man in DE 199 02 685. Ein kommerziell erhältliches Beispiel hergestellt aus Polyolen, Isocyanaten und hydroxyfunktionellen Methacrylaten ist EBECRYL 210-5129 der Fa. UCB Chemicals. Urethan(meth)acrylate erhöhen in einem Reaktionsharz, ohne größere Temperaturabhängigkeit, die Flexibilität, die Reißfestigkeit und die Reißdehnung. Dies hat, wie überraschend gefunden wurde, auf die Fahrbahnmarkierung in zweierlei Hinsicht einen Einfluss: Die Temperaturstabilität der Markierung nimmt zu und, besonders überraschend, können die Nachteile eines, bedingt durch den höheren Vernetzergehalt, höheren Vernetzungsgrades bezüglich Versprödung und Haftung gegenüber der Fahrbahnoberfläche ausgeglichen werden oder sogar gegenüber Kaltplastiken gemäß dem Stand der Technik verbessert werden. Dazu ist eine für Fahrbahnmarkierungen relativ hohe Konzentration der Urethan(meth)acrylate in dem Reaktionsharz nötig. Das erfindungsgemäße Reaktionsharz enthält zwischen 5 Gew% und 30 Gew%, bevorzugt zwischen 10 Gew% und 20 Gew% der beschriebenen Urethan(meth)acrylate.

Bei den in dem Reaktionsharz enthaltenden Monomeren handelt es sich um Verbindungen, die ausgewählt sind aus der Gruppe der (Meth)acrylate wie beispielsweise Alkyl(meth)acrylate von gradkettigen, verzweigten oder cycloaliphatischen Alkoholen mit 1 bis 40 C-Atomen, wie zum Beispiel Methyl(meth)acrylat, Ethyl(meth)acrylat, n-Butyl(meth)acrylat, 2-Ethylhexyl(meth)acrylat, Stearyl-(meth)acrylat, Lauryl(meth)acrylat; Aryl(meth)acrylate wie zum Beispiel Benzyl(meth)acrylat; Mono(meth)acrylate von Ethern, Polyethylenglycolen, Polypropylenglycolen oder deren Mischungen mit 5 bis 80 C-Atomen, wie beispielsweise Tetrahydrofurfury(lmeth)acrylat, Methoxy(m)ethoxyethyl(meth)acrylat, Benzyloxymethyl(meth)acrylat, 1-Ethoxybutyl(meth)acrylat, 1-Ethoxyethyl(meth)acrylat, Ethoxymethyl(meth)acrylat, Poly(ethylenglycol)methylether(meth)acrylat und Poly(propylenglycol)-methylether(meth)acrylat, zusammen. Als Bestandteile von Monomergemischen eignen sich auch zusätzliche Monomere mit einer weiteren funktionellen Gruppe, wie a,β-ungesättigte Mono- oder Dicarbonsäuren, beispielsweise Acrylsäure, Methacrylsäure oder Itaconsäure; Ester der Acrylsäure oder Methacrylsäure mit zweiwertigen Alkoholen, beispielsweise Hydroxyethyl(meth)acrylat oder Hydroxypropyl(meth)acrylat; Acrylamid oder Methacrylamid; oder Dimethylaminoethyl(meth)acrylat. Weitere geeignete Bestandteile von Monomergemischen sind beispielsweise Glycidyl(meth)acrylat oder silylfunktionelle (Meth)acrylate.

Neben den zuvor dargelegten (Meth)acrylaten können die Monomergemische auch weitere ungesättigte Monomere aufweisen, die mit den zuvor genannten (Meth)acrylaten und mittels freiradikalischer Polymerisation copolymerisierbar sind. Hierzu gehören unter anderem 1-Alkene oder Styrole. Im Einzelnen wird das Poly(meth)acrylat nach Anteil und Zusammensetzung zweckmäßigerweise im Hinblick auf die gewünschte technische Funktion gewählt werden.
Der Monomeranteil des Reaktionsharzes liegt dabei zwischen 20 Gew% und 50 Gew%, bevorzugt zwischen 30 Gew% und 40 Gew%.

In sogenannten MO-PO-Systemen liegen neben den aufgeführten Monomeren auch Polymere, zur besseren Unterscheidbarkeit im Rahmen dieses Schutzrechtes als Präpolymer bezeichnet, bevorzugt Polyester oder Poly(meth)acrylate vor. Diese werden zur Verbesserung der Polymerisationseigenschaften, der mechanischen Eigenschaften, der Haftung zum Untergrund sowie der optischen Anforderungen an die Harze eingesetzt. Der Präpolymeranteil des Reaktionsharzes liegt dabei zwischen 10 Gew% und 30 Gew%, bevorzugt zwischen 15 Gew% und 25 Gew%. Sowohl die Polyester als auch die Poly(meth)acrylate können zusätzliche funktionelle Gruppen zur Haftvermittlung oder zur Copolymerisation in der Vernetzungsreaktion, wie beispielsweise in Form von Doppelbindungen, aufweisen. Bevorzugt, in Hinblick auf eine bessere Farbstabilität der Fahrbahnmarkierung, weisen die Präpolymere jedoch keine Doppelbindungen auf.
Besagte Poly(meth)acrylate sind im Allgemeinen aus den gleichen Monomeren zusammengesetzt, wie sie bereits bezüglich der Monomere im Harzsystem aufgelistet wurden. Sie können durch Lösungs-, Emulsions-, Suspensions-, Substanz- oder Fällungspolymerisation gewonnen werden und werden dem System als Reinstoff zugesetzt.
Besagte Polyester werden in Substanz via Polykondensation oder ringöffnende Polymerisation gewonnen und setzen sich aus den für diese Anwendungen bekannten Bausteinen zusammen.

Als Hilfs- und Zusatzstoffe können zusätzlich Regler, Weichmacher, Paraffine, Stabilisatoren, Inhibitoren, Wachse und/oder Öle eingesetzt werden.
Die Paraffine werden zugesetzt, um eine Inhibierung der Polymerisation durch den Sauerstoff der Luft zu verhindern. Dazu können mehrere Paraffine mit unterschiedlichen Schmelzpunkten in unterschiedlichen Konzentrationen verwendet werden.

Als Regler können alle aus der radikalischen Polymerisation bekannten Verbindungen verwendet werden. Bevorzugt werden Mercaptane wie n-Dodecylmercaptan eingesetzt.
Als Weichmacher werden vorzugsweise Ester, Polyole, Öle, niedermolekulare Polyether oder Phthalate eingesetzt.

Zusätzlich können den Formulierungen zur Fahrbahnmarkierungen Farbstoffe, Glasperlen, Fein- und Grobfüllstoffe, Netz-, Dispergier- und Verlaufshilfsmittel, UV-Stabilisatoren, Entschäumer und Rheologieadditive zugesetzt werden.

Für das Einsatzgebiet der Formulierungen als Farbahnmarkierung oder Flächenmarkierung werden als Hilfs- und Zusatzstoffe vorzugsweise Farbstoffe zugegeben. Besonders bevorzugt sind weiße, rote, blaue, grüne und gelbe anorganische Pigmente, besonders bevorzugt sind weiße Pigmente wie Titandioxid.

Glasperlen werden vorzugsweise in Formulierungen für Fahrbahnmarkierungen und Flächenmarkierungen als Reflexionsmittel eingesetzt. Die eingesetzten handelsüblichen Glasperlen haben Durchmesser von 10 µm bis 2000 µm, bevorzugt 50 µm bis 800 µm. Die Glasperlen können zur besseren Verarbeitung und Haftung mit einem Haftvermittler versehen werden. Bevorzugt können die Glasperlen silanisiert werden.

Zudem können der Formulierung ein oder mehrere mineralische Feinfüllstoffe und Grobfüllstoffe zugesetzt werden. Diese Materialien dienen auch als Rutschhemmer und werden daher insbesondere zur Griffverbesserung und zur zusätzlichen Färbung der Fahrbahnmarkierung eingesetzt. Feinfüllstoffe werden aus der Gruppe der Calciumcarbonate, Bariumsulfate, Quarze, Quarzmehle, gefällten und pyrogenen Kieselsäuren, Pigmente und Cristobalite eingesetzt. Als Grobfüllstoffe werden Quarze, Cristobalite, Korunde und Aluminiumsilikate eingesetzt.

Ebenso können herkömmliche UV-Stabilisatoren eingesetzt werden. Vorzugsweise werden die UV-Stabilisatoren ausgewählt aus der Gruppe der Benzophenonderivate, Benzotriazolderivate, Thioxanthonatderivate, Piperidinolcarbonsäureesterderivate oder Zimtsäureesterderivate.

Aus der Gruppe der Stabilisatoren bzw. Inhibitoren werden vorzugsweise substituierte Phenole, Hydrochinonderivate, Phosphine und Phosphite eingesetzt.

Folgende Komponenten können optional auch in Formulierungen zur Fahrbahnmarkierung enthalten sein:
Netz-, Dispergier- und Verlaufshilfsmittel werden vorzugsweise ausgewählt aus der Gruppe der Alkohole, Kohlenwasserstoffe, Glycolderivate, Derivate von Glycolsäureestern, Essigsäureestern und Polysiloxanen, Polyether, Polysiloxane, Polycarbonsäuren, gesättigte und ungesättigte Polycarbonsäureaminamide eingesetzt.

Als Rheologieadditive werden vorzugsweise Polyhydroxycarbonsäureamide, Harnstoffderivate, Salze ungesättigter Carbonsäureester, Alkylamoniumsalze saurer Phosphorsäurederivate, Ketoxime, Aminsalze der p-Toluolsulfonsäure, Aminsalze von Sulfonsäurederivaten sowie wässrige oder organische Lösungen oder Mischungen der Verbindungen verwendet. Es wurde gefunden, dass Rheologieadditive auf Basis pyrogener oder gefällter, optional auch silanisierter, Kieselsäuren mit einer BET-Oberfläche von 10-700 nm²/g besonders geeignet sind.

Entschäumer werden vorzugsweise ausgewählt aus der Gruppe der Alkohole, Kohlenwasserstoffe, paraffinbasischen Mineralöle, Glycolderivate, Derivate von Glycolsäureestern, Essigsäureestern und Polysiloxanen eingesetzt.

Diese Formulierungsfreiheiten zeigen, dass das erfindungsgemäße Reaktionsharz bzw. die erfindungsgemäße Kaltplastik, das Reaktionsharz enthaltend, genauso formulierbar und additivierbar ist, wie eine etablierte Kaltplastik des Standes der Technik. Somit sind auch die Abriebfestigkeit, die Langlebigkeit, der Weißgrad, die Pigmentierung und die Griffigkeit mindestens so gut wie bei Systemen des Standes der Technik. Überraschend wurde jedoch gefunden, dass die Langlebigkeit und die Haftung begründet durch die erläuterten, besonderen mechanischen Eigenschaften und die zusätzlichen haftvermittelnden Eigenschaften der Urethan(meth)acrylate sogar besser sind als im Stand der Technik beschrieben.

Zumindest die Vergleichbarkeit mit dem Stand der Technik gilt entsprechend auch bezüglich der Lagerstabilität des Reaktionsharzes.
Auch kann das System bezüglich des zu beschichtenden Untergrunds, mittels Wahl geeigneter Monomere, Präpolymere und/oder Haftvermittler, optimiert werden. Die erfindungsgemäßen Systeme sind entsprechend variabel optimierbar für die Markierung von Asphalt-, Beton- oder Natursteinoberflächen.

Auch bezüglich der Applikationstechnologie sind die erfindungsgemäßen Systeme flexibel einsetzbar. Die erfindungsgemäßen Reaktionsharze, bzw. Kaltplastiken können sowohl im Spritz- als auch im Extrusionsverfahren aufgetragen werden.

Die im Folgenden gegebenen Beispiele werden zur besseren Veranschaulichung der vorliegenden Erfindung gegeben, sind jedoch nicht dazu geeignet, die Erfindung auf die hierin offenbarten Merkmale zu beschränken.

### Beispiele

Die Messung der Form- und Haftungsstabilität erfolgt gemäß DAfStb-RiLi 01/DIN EN 1542 99 bzw. nach DIN EN 1436.

### Beispiel 1: Herstellung des mehrwertigen

### Urethanmethacrylats (Isocyanat-MA)

In einem Rundkolben mit Rückflusskühler, Thermometer, Rührer und Tropftrichter werden 0,2 Mol ^{®}Voranol CP 6055 (DOW), 0,4 Mol Hydroxyethylmethacrylat (HEMA), 500 ppm 2,6-Di-tert.-butyl-4-methylphenol, bezogen auf die voraussichtliche Menge des Endprodukts, 0,46 Mol IPDI (Isophorondiisocyanat) und 2 * 10⁻³ Mol Dibutylzinndilaurat (DBTDL) vorgelegt und eine Stunde bei Raumtemperatur gerührt. Anschließend wird die Temperatur der Mischung innerhalb einer Stunde kontinuierlich auf 80°C angehoben. Danach wird die Temperatur ca. 5 Stunden auf 80°C gehalten, bis der Gehalt an Isocyanatgruppen auf unter 0,1% gefallen ist, wobei sich oberhalb der Mischung ein Stickstoff-Sauerstoff-Gemisch mit ca. 7 Vol% Sauerstoff befindet. Restmengen an Isocyanatgruppen werden mit einer stöchiometrischen Menge HEMA umgesetzt, sofern der Isocyanatgehalt trotz verlängerter Nachreaktionszeit nicht auf unter 0,1% zurückgeht. Anschließend werden der Mischung 500 ppm 2-tert-Butyl-4,6-dimethylphenol, bezogen auf die Gesamtmasse des Endprodukts, beigefügt. Es wird bei dieser Umsetzung ein Gemisch von Urethanmethacrylaten erhalten, das ohne weitere Aufarbeitung in weiteren Umsetzungen verwendet werden kann.

### Beispiel 2

35 GT (Gewichtsteile) des folgenden Reaktionsharzes der Zusammensetzung:

| | |
|---|---|
| Methylmethacrylat | 11,4 |
| Triethylenglykoldimethacrylat | 13 |
| Butyldiglykolmethacrylat | 21 |
| 1,4-Butandioldimethacrylat | 13 |
| Degalan LP 64/12 * | 3,5 |
| Degalan LP 66/02 * | 15 |
| Isocanat-MA gem. Bsp.1 | 12 |
| Di-iso-propyl-para-toluidin | 2,5 |
| Dimethyl-para-toluidin | 0,3 |
| Paraffin 5603 | 1 |
| Dibutylmaleinat | 5 |
| Hydroxypropylmethacrylat | 2 |

| | |
|---|---|
| *jeweils bezogen bei Fa. Evonik Röhm GmbH | |

Mit den Eigenschaften:

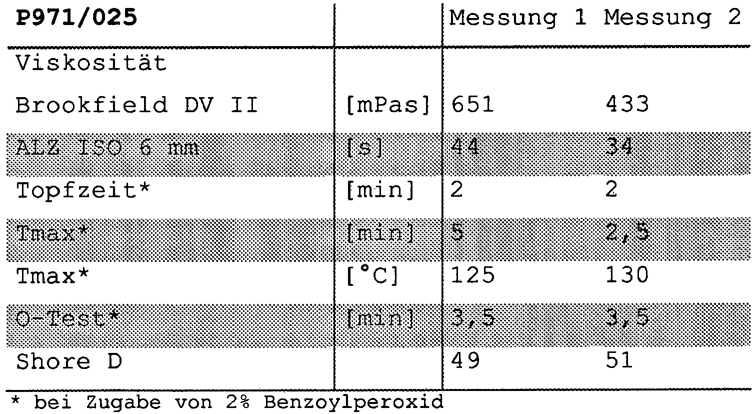

Die Zusammensetzung wird mit 10 GT Titandioxid (TR 92), 54,6 GT Feinfüllstoff (Omyacarb 15 GU), 0,3 GT eines Dispergierhilfsmittels (TEGO® Dispers 670) und 0,1 GT Rheologieadditiv (Byk 410) unter Dispergieren zu einer Fahrbahnmarkierungsfarbe konfektioniert.
Dabei wird das Harz vorgelegt, ein Teil des Rheologieadditivs 5 Minuten eindispergiert, im nächsten Schritt das Dispergierhilfsmittels ebenfalls 5 Minuten, und anschließend das Titandioxid und der Feinfüllstoff jeweils weitere 10 Minuten eindispergiert. Am Schluss wird die restliche Dispergierhilfsmittels eingearbeitet.
a. In diese Kaltspritzplastikmasse werden 2% Dibenzoylperoxid unter Rühren zugefügt und über eine Airless Spritzmaschine 700 µm dick bei 23°C aufgetragen. Als Reflexkörper / Griffigkeitsmittel werden 450 g/m² Megalux 600-800 3:1 MKT18 (Swarco, enthalten Korund im Verhältnis 3:1) nachgestreut.
b. bei 5°C
c. bei 40°C
Die Formulierungseigenschaften der Kaltspritzplastik (Topf und Härtezeiten) sind folgender Tabelle zu entnehmen:

| Viskosität | Ausbreitmaß | | Oberflächentemperatur | Topfzeit | O-Test* |
|---|---|---|---|---|---|
| Brookfield DV II | | | | | |
| 3700 mPas | 9 cm | | 5 °C | 120 s | 4,5 - 5 min |
| | | | 23 °C | 60 s | 3 - 3,5 min |
| | | | 40 °C | 40 s | 2,5 - 3 min |

| | | | | | |
|---|---|---|---|---|---|
| * mit 2 Gew% Benzoylperoxid | | | | | |

d. bei Zugabe von 4% Dibenzoylperoxid bei 23°C wird eine Topfzeit von 45 Sekunden, sowie eine Härtezeit von 2 Minuten erreicht.

### 5°C Härtungen (mit 2%

### BPO) (Beispiel 2 b)

| | |
|---|---|
| **Topfzeit min** | 2' |
| **O-Test min** | 4,5-5' |
| **Shore D** | 60 |

### 23°C Härtungen (mit 2%

### BPO) mit 4% BPO

| | | |
|---|---|---|
| **Topfzeit** | 50-60 sec | 45 sec |
| **O-Test** | 3-3,5' | 2 min |
| **Shore D** | 62 | |
| **Weissgrad** | 90,71 | 89,97 |
| **Normfarb-Koordinaten** | X=0,3197 | X=0,3204 |
| | Y=0,3368 | Y=0,3389 |

### 40°C-Härtungen (mit 2%

### BPO)

| | |
|---|---|
| **Topfzeit min** | ca. 40 sec |
| **O-Test min** | 2,5-3' |
| **Shore D** | 62 |
| **Weissgrad** | 89,43 |
| **Normfarb-Koordinaten** | X=0,3213 |
| | Y=0,3382 |

Zu Beispiel a. :
Anfangswerte nach DIN EN 1436
Griffigkeit 58 SRT-Einheiten
Nachtsichtbarkeit trocken 320 [mcd/m²lx]
Leuchtdichtekoeffizient Qd = 305 [mcd/m²l]

### Vergleichsbeispiele

Vergleichsbeispiele mit Kaltspritzplastiken zur Straßenmarkierung finden sich beispielsweise in WO 2008/022861. Die dort aufgeführten Beispiele zeigen bei Temperaturen von 5 °C Härtungszeiten zwischen 17 min und 20 min; bei 23 °C von 8 min und bei 45 °C von zwischen 9 min und 12 min.

## Patentansprüche

1. Reaktionsharz zur Markierung von Fahrbahnen auf. (Meth)acrylatbasis, **dadurch gekennzeichnet, dass** das Reaktionsharz folgende Inhaltsstoffe
aufweist:
20 Gew% bis 30 Gew% Vernetzer, bei denen es sich um Allyl(meth)acrylat, Di- und/oder Tri(meth)acrylat handelt,
30 Gew% bis 40 Gew% (Meth)acrylate und/oder mit (Meth)acrylaten copolymerisierbare Monomere, ausgewählt aus Alkyl(meth)acrylaten von gradkettigen, verzweigten oder cycloaliphatischen Alkoholen mit 1 bis 40 C-Atomen, a,β-ungesättigten Mono- oder Dicarbonsäuren, Ester der Acrylsäure oder Methacrylsäure mit zweiwertigen Alkoholen, Acrylamid, Methacrylamid, Dimethylaminoethyl(meth)acrylat, 1-Alkenen oder Styrolen,
10 Gew% bis 20 Gew% Urethan(meth)acrylate,
15 Gew% bis 25 Gew% Präpolymere, ausgewählt aus Poly(meth)acrylaten oder Polyestern, und
0 Gew% bis 5 Gew% Beschleuniger.

2. Reaktionsharz gemäß Anspruch 1, **dadurch gekennzeichnet,**
**dass** das Reaktionsharz halogenfrei ist, und dass das Reaktionsharz folgende Inhaltsstoffe aufweist:
20 Gew% bis 30 Gew% Allyl(meth)acrylat, Di- und/oder Tri(meth)acrylat,
30 Gew% bis 40 Gew% (Meth)acrylate und/oder mit (Meth)acrylaten copolymerisierbare Monomere, gemäß Anspruch 1,
10 Gew% bis 20 Gew% Urethan(meth)acrylate,
15 Gew% bis 25 Gew% Poly(meth)acrylate und
0 Gew% bis 5 Gew% Beschleuniger.

3. Reaktionsharz gemäß Anspruch 1 oder 2, **dadurch gekennzeichnet,**
**dass** das Reaktionsharz weitere Hilfsstoffe enthält.

4. Kaltplastik, **dadurch gekennzeichnet,**
**dass** die Kaltplastik folgende Komponenten aufweist:
15 Gew% bis 45 Gew% eines Reaktionsharzes gemäß einem der Ansprüche 1 bis 3,
1 Gew% bis 5 Gew% einer Mischung, enthaltend ein oder mehrere Initiatoren,
7 Gew% bis 15 Gew% eines anorganischen Pigments, bevorzugt Titandioxid und
50 Gew% bis 60 Gew% mineralische Füllstoffe.

5. Kaltplastik gemäß Anspruch 4, enthaltend ein Reaktionsharz gemäß einem der Ansprüche 1 bis 3, **dadurch gekennzeichnet,**
**dass** es sich bei dem Initiator um ein Peroxid und bei dem Beschleuniger um ein Amin handelt.

6. Kaltplastik gemäß Anspruch 5, **dadurch gekennzeichnet, dass** es sich bei dem Peroxid um Dilauroylperoxid und/oder Dibenzoylperoxid und bei dem Amin um ein tertiäres, aromatisch substituiertes Amin handelt.

7. Kaltplastik gemäß einem der Ansprüche 4 bis 6, **dadurch gekennzeichnet,**
**dass** das Peroxid Bestandteil des Reaktionsharzes gemäß einem der Ansprüche 1 bis 3 ist, und
**dass** der Beschleuniger nicht Bestandteil des Reaktionsharzes, sondern einer getrennten Komponente der Kaltplastik ist.

8. Kaltplastik gemäß einem der Ansprüche 4 bis 7, **dadurch gekennzeichnet,**
**dass** die Komponenten vor oder während dem Auftragen auf einer Fahrbahnoberfläche gemischt werden.

9. Kaltplastik gemäß einem der Ansprüche 4 bis 8, **dadurch gekennzeichnet,**
**dass** eine Fahrbahnmarkierung bestehend aus dieser Kaltplastik 5 min, bevorzugt 2 min nach Auftragen auf der Fahrbahnoberfläche wieder befahrbar ist.

10. Verwendung eines Reaktionsharzes gemäß einem der Ansprüche 1 bis 3 zur Herstellung von Fahrbahnmarkierungen.

11. Verwendung einer Kaltplastik gemäß einem der Ansprüche 4 bis 9 zur Herstellung von Fahrbahnmarkierungen.

12. Verwendung einer Kaltplastik gemäß Anspruch 11 zur Herstellung von Fahrbahnmarkierungen, **dadurch gekennzeichnet, dass** vor, während oder direkt nach der Aufbringung der Kaltplastik auf der Fahrbahnoberfläche Glaskugeln zugegeben werden.

## Claims

1. Reactive resin for the marking of trafficways based on (meth)acrylates, **characterized in that** the reactive resin has the following ingredients:
from 20% by weight to 30% by weight of crosslinking agents, these being allyl (meth)acrylate, di(meth)acrylate and/or tri(meth)acrylate,
from 30% by weight to 40% by weight of (meth)acrylate and/or monomers copolymerizable with (meth)acrylates,
selected from alkyl (meth)acrylates of straight-chain, branched or cycloaliphatic alcohols having from 1 to 40 carbon atoms, α,β-unsaturated mono- or dicarboxylic acids, esters of acrylic acid of methacrylic acid with dihydric alcohols, acrylamide, methacrylamide, dimethylaminoethyl (meth)acrylate, 1-alkenes or styrenes
from 10% by weight to 20% by weight of urethane (meth)acrylates,
from 15% by weight to 25% by weight of prepolymers, selected from poly(meth)acrylates and polyesters, and
from 0% by weight to 5% by weight of accelerators.

2. Reactive resin according to Claim 1, **characterized in that**
the reactive resin is halogen-free, and that the reactive resin has the following ingredients:
from 20% by weight to 30% by weight of allyl (meth)acrylate, di(meth)acrylate and/or tri(meth)acrylate
from 30% by weight to 40% by weight of (meth)acrylates and/or monomers copolymerizable with (meth)acrylates, according to Claim 1,
from 10% by weight to 20% by weight of urethane (meth)acrylates and
from 15% by weight to 25% by weight of poly(meth)acrylates and
from 0% by weight to 5% by weight of accelerators.

3. Reactive resin according to Claim 1 or 2,
**characterized in that**
the reactive resin comprises other auxiliaries.

4. Cold plastic, **characterized in that** the cold plastic has the following components:
from 15% by weight to 45% by weight of a reactive resin according to any of Claims 1 to 3,
from 1% by weight to 5% by weight of a mixture comprising one or more initiators,
from 7% by weight to 15% by weight of an inorganic pigment, preferably titanium dioxide, and
from 50% by weight to 60% by weight of mineral fillers.

5. Cold plastic according to Claim 4, comprising a reactive resin according to any of Claims 1 to 3, **characterized in that**
the initiator involves a peroxide and the accelerator involves an amine.

6. Cold plastic according to Claim 5, **characterized in that**
the peroxide involves dilauroyl peroxide and/or dibenzoyl peroxide and the amine involves a tertiary, aromatically substituted amine.

7. Cold plastic according to any of Claims 4 to 6, **characterized in that**
the peroxide is a constituent of the reactive resin according to any of Claims 1 to 3, and that the accelerator is not a constituent of the reactive resin, but instead is a separate component of the cold plastic.

8. Cold plastic according to any of Claims 4 to 7, **characterized in that**
the components are mixed prior to or during application on a trafficway surface.

9. Cold plastic according to any of Claims 4 to 8, **characterized in that**
traffic can resume passage over a trafficway marking composed of said cold plastic 5 min., preferably 2 min., after application on the trafficway surface.

10. Use of a reactive resin according to any of Claims 1 to 3 for the production of trafficway markings.

11. Use of a cold plastic according to any of Claims 4 to 9 for the production of trafficway markings.

12. Use of a cold plastic according to Claim 11 for the production of trafficway markings, **characterized in that** glass beads are added prior to, during or directly after the application of the cold plastic on the trafficway surface.

## Revendications

1. Résine réactive destinée au marquage de voies de circulation, à base de (méth)acrylates, **caractérisée en ce que**
la résine réactive comporte les composants suivants :
20 % en poids à 30 % en poids d'agent de réticulation, consistant en (méth)acrylate d'allyle, di- et/ou tri(méth)acrylate,
30 % en poids à 40 % en poids de (méth)acrylates et/ou de monomères copolymérisables avec des (méth)acrylates, choisis parmi des (méth)acrylates d'alkyle d'alcools à chaîne droite, ramifiés ou cycloaliphatiques, ayant de 1 à 40 atomes de carbone, des acides mono- ou dicarboxyliques α,β-insaturés, des esters de l'acide acrylique ou de l'acide méthacrylique avec des alcools dihydriques, l'acrylamide, le méthacrylamide,
le (méth)acrylate de diméthylaminoéthyle, des 1-alcènes ou des styrènes,
10 % en poids à 20 % en poids d'uréthane(méth)-acrylates,
15 % en poids à 25 % en poids de prépolymères, choisis parmi des poly(méth)acrylamides ou des polyesters, et
0 % en poids à 5 % en poids d'accélérateur.

2. Résine réactive selon la revendication 1, **caractérisée en ce que**
la résine réactive est exempte d'halogène, et **en ce que** la résine réactive comporte les composants suivants :
20 % en poids à 30 % en poids de (méth)acrylate d'allyle, di- et/ou tri(méth)acrylate,
30 % en poids à 40 % en poids de (méth)acrylates et/ou de monomères copolymérisables avec des (méth)acrylates, selon la revendication 1,
10 % en poids à 20 % en poids d'uréthane(méth)-acrylates,
15 % en poids à 25 % en poids de poly(méth)-acrylates, et
0 % en poids à 5 % en poids d'accélérateur.

3. Résine réactive selon la revendication 1 ou 2, **caractérisée en ce que**
la résine réactive contient d'autres adjuvants.

4. Matière plastique à froid, **caractérisée en ce que**
la matière plastique à froid comporte les composants suivants :
15 % en poids à 45 % en poids d'une résine réactive selon l'une quelconque des revendications 1 à 3,
1 % en poids à 5 % en poids d'un mélange, contenant un ou plusieurs amorceurs,
7 % en poids à 15 % en poids d'un pigment inorganique, dioxyde de titane de préférence et
50 % en poids à 60 % en poids de charges minérales.

5. Matière plastique à froid selon la revendication 4, contenant une résine réactive selon l'une quelconque des revendications 1 à 3, **caractérisée en ce que**
pour ce qui est de l'amorceur il s'agit d'un peroxyde et pour ce qui est de l'accélérateur il s'agit d'une amine.

6. Matière plastique à froid selon la revendication 5, **caractérisée en ce que**
le peroxyde consiste en peroxyde de dilauroyle et/ou peroxyde de dibenzoyle et l'amine consiste en une amine tertiaire à substitution aromatique.

7. Matière plastique à froid selon l'une quelconque selon l'une quelconque des revendications 4 à 6, **caractérisée en ce que**
le peroxyde est un composant de la résine réactive selon l'une quelconque des revendications 1 à 3, et **en ce que** l'accélérateur n'est pas un composant de la résine réactive, mais un composant séparé de la résine réactive.

8. Matière plastique à froid selon l'une quelconque selon l'une quelconque des revendications 4 à 7, **caractérisée en ce**
**qu'**on mélange les composants avant ou pendant l'application sur une surface de voie de circulation.

9. Matière plastique à froid selon l'une quelconque selon l'une quelconque des revendications 4 à 8, **caractérisée en ce**
**qu'**un marquage de voie de circulation consistant en cette matière plastique à froid se prête de nouveau à la circulation 5 min, de préférence 2 min après application sur la surface de la voie de circulation.

10. Utilisation d'une résine réactive selon l'une quelconque des revendications 1 à 3, pour la production de marquages de voies de circulation.

11. Utilisation d'une matière plastique à froid selon l'une quelconque des revendications 4 à 9, pour la production de marquages de voies de circulation.

12. Utilisation d'une matière plastique à froid selon la revendication 11 pour la production de marquages de voies de circulation, **caractérisée en ce qu'**on ajoute des billes de verre avant, pendant ou immédiatement après l'application de la matière plastique à froid sur la surface de la voie de circulation.
